# EUROPÄISCHE PATENTANMELDUNG

(11) **EP 3 168 540 A1**
(43) Veröffentlichungstag der Anmeldung: **17.05.2017**
(21) Anmeldenummer: 16191034.4
(22) Anmeldetag: 28.09.2016
(51) Int. Cl.: F24D 19/10, G05D 23/19

(54) **VERFAHREN ZUM DURCHFÜHREN EINES AUTOMATISIERTEN HYDRAULISCHEN ABGLEICHS, VENTIL UND HEIZUNGSANLAGE HIERZU**

(30) Priorität: 10.11.2015 DE 102015222110
(71) Anmelder: ROBERT BOSCH GMBH, 70442 Stuttgart (DE)
(72) Erfinder: Holtz, Gerald, 70174 Stuttgart (DE)

(57) **Zusammenfassung**

Die Erfindung betrifft ein Verfahren zum Durchführen eines automatisierten hydraulischen Abgleichs einer Heizungsanlage (10) mit mindestens einem Wärmeerzeuger (12), mindestens zwei Wärmeverbrauchern (22, 24, 26) und mindestens zwei Ventilen (28, 30, 32, 40), wobei insbesondere die mindestens zwei Ventile (28, 30, 32, 40) einen Durchfluss durch die mindestens zwei Wärmeverbraucher (22, 24, 28) steuern, wobei die mindestens zwei Ventile (28, 30, 32, 40) jeweils eine ansteuerbare Durchflussöffnung (46) aufweisen, wobei die mindestens zwei Ventile (28, 30, 32, 40) mit dem mindestens einen Wärmeerzeuger (12) und den mindestens zwei Wärmeverbrauchern (22, 24, 26) verbunden. Es wird vorgeschlagen, dass eine Ist-Aufheizzeit (65) - insbesondere eine Aufheizzeit der mindestens zwei Wärmeverbraucher (22, 24, 26) und/oder eine Aufheizzeit eines Raumes um eine Temperaturdifferenz - durch die mindestens zwei Ventile (28, 30, 32, 40) bestimmt wird, und dass maximale Ventilstellungen (67) der mindestens zwei Ventile (28, 30, 32, 40) in Abhängigkeit davon festgelegt werden, ob die Ist-Aufheizzeit (65) eine vorgegebenene Soll-Aufheizzeit (63) überschreitet oder unterschreitet, wodurch die Heizungsanlage (10) hydraulisch abgeglichen und an sich ändernde Randbedingungen angepasst wird. Die Erfindung betrifft weiter ein Ventil (40), in welchem obiges Verfahren durchführbar ist. Weiter betrifft die Erfindung eine Heizungsanlage (10), welche mit obigem Verfahren automatisiert abgleichbar ist und/oder mindestens ein solches Ventil (40) aufweist.

## Beschreibung

Die Erfindung betrifft ein Verfahren zum Durchführen eines automatisierten hydraulischen Abgleichs einer Heizungsanlage mit mindestens einem Wärmeerzeuger, mindestens zwei Wärmeverbrauchern und mindestens zwei Ventilen, wobei insbesondere die mindestens zwei Ventile einen Durchfluss durch die mindestens zwei Wärmeverbraucher steuern, wobei die mindestens zwei Ventile jeweils eine ansteuerbare Durchflussöffnung aufweisen, wobei die mindestens zwei Ventile mit dem mindestens einen Wärmeerzeuger und den mindestens zwei Wärmeverbrauchern verbunden sind. Die Erfindung betrifft weiter ein Ventil, mit welchem obiges Verfahren durchführbar ist. Weiter betrifft die Erfindung eine Heizungsanlage, welche mit obigem Verfahren automatisiert abgleichbar ist und/oder mindestens ein solches Ventil aufweist.

### Stand der Technik

Es sind unterschiedliche Verfahren zum Durchführen eines hydraulischen Abgleichs in einem Heizsystem bekannt. Oftmals werden diese manuell durchgeführt, und/oder es sind vielzählige zusätzliche Sensoren und weitere Komponenten nötig, die die für den hydraulischen Abgleich benötigten Informationen an eine Steuereinheit übermitteln, was zusätzliche Kosten und einen Mehraufwand nach sich zieht. Desweiteren werden zusätzliche Daten über die Heizungsanlage benötigt, welche oftmals schwer zugänglich sind. Weiter werden auch elektronische Ventile herangezogen, die mit einer Steuereinheit verbunden sind.

Es soll ein verbesserter hydraulischer Abgleich bereitgestellt werden, welcher kostengünstiger und einfacher durchführbar ist.

### Offenbarung der Erfindung

Diese Aufgabe wird durch das erfindungsgemäße Verfahren zum Durchführen eines automatisierten hydraulischen Abgleichs einer Heizungsanlage gemäß Anspruch 1 gelöst. Die Heizungsanlage weist mindestens einen Wärmeerzeuger, mindestens zwei Wärmeverbraucher und mindestens zwei Ventile auf, insbesondere mindestens zwei Ventile für die mindestens zwei Wärmeverbraucher, wobei die mindestens zwei Ventile jeweils eine ansteuerbare Durchflussöffnung aufweisen. Dabei sind die mindestens zwei Ventile mit dem mindestens einen Wärmeerzeuger und den mindestens zwei Wärmeverbrauchern verbunden. Das Verfahren zeichnet sich dadurch aus, dass eine Ist-Aufheizzeit - insbesondere eine Aufheizzeit der mindestens zwei Wärmeverbraucher und/oder eine Aufheizzeit eines Raumes um eine Temperaturdifferenz - durch die mindestens zwei Ventile bestimmt wird. Dabei werden maximale Ventilstellungen der mindestens zwei Ventile in Abhängigkeit davon festgelegt, ob die Ist-Aufheizzeit eine vorgegebenene Soll-Aufheizzeit überschreitet oder unterschreitet, wobei die mindestens zwei Ventile jeweils ein den maximalen Ventilstellungen entsprechendes Signal generieren. Hierdurch wird die Heizungsanlage hydraulisch abgeglichen und an sich ändernde Randbedingungen angepasst.

Unter einem Wärmeerzeuger wird eine Einheit, insbesondere ein Bereich oder Körper, verstanden, welche Wärme bereitstellen kann. Die bereitgestellte Wärme ist auf ein Trägermedium, wie Gas, ein Fluid oder dergleichen, übertragbar. Beispiele sind ein Gas- oder Ölbrenner, eine Solaranlage, eine Wärmepumpe, ein Pelletofen oder ein Klimagerät. Dabei wird oftmals Wasser als das energieübertragende Medium verwendet.

Unter einem Wärmeverbraucher wird eine Einheit, insbesondere ein Bereich oder ein Körper, wie beispielsweise ein Gerät oder eine vergleichbare Vorrichtung oder ein Raum, verstanden, welche thermische Energie speichern und an ein Medium, wie Gegenstände, Flüssigkeiten oder Gase, abgeben kann. Insbesondere kann es sich um eine Wärmeeinrichtung handeln. Beispiele sind ein Radiator, eine Fußbodenheizung und dergleichen.

Mit Durchflussöffnung wird eine Öffnung einer Leitung, insbesondere die Gesamtfläche der Öffnung, und/oder eine Öffnung eines Ventils bezeichnet, durch welche ein Fluid treten kann. Üblicherweise weist ein Ventil einen Ventilstößel oder dergleichen auf, mit welchem eine Durchflussöffnung einer oder mehrerer Leitungen verschlossen und/oder geöffnet werden kann. Eine Ventilstellung des Ventils meint die Position des Ventilstößels. Abhängig von der Ventilstellung wird das Maß der Durchflussöffnung verändert, insbesondere verkleinert oder vergößert.

Bei der Verbindung zwischen dem mindestens einen Wärmeerzeuger, den mindestens zwei Wärmeverbrauchern und den mindestens zwei Ventilen handelt es sich um eine hydraulische Verbindung. Bei der hydraulischen Verbindung befinden sich die genannten Komponenten in einem oder mehreren Heizkreisen. Der mindestens eine Wärmeerzeuger und die mindestens zwei Wärmeverbraucher können zusätzlich auch elektronisch verbunden sein. Zur Durchführung des automatisierten hydraulischen Abgleichs muss keine elektronische oder regelungstechnische Verbindung zwischen den Ventilen selbst bestehen. Der hydraulische Abgleich wird ohne Austausch von Daten zwischen den vorhandenen Ventilen durchgeführt. Dies stellt eine Vereinfachung dar, da nun auf elektronische Verbindungen zwischen den Ventilen verzichtet werden kann, was auch dazu führt, dass der hydraulische Abgleich leicht durchführbar ist, auch für ältere Heizungs- und/oder Kühlanlagen.

Unter einer Aufheizzeit ist die Zeit zu verstehen, die benötigt wird, um ein Fluid von einer Ausgangstemperatur um einen festen Wert, beispielsweise um 1°C oder um 1K, auf eine Zieltemperatur zu erwärmen. So ist unter einer Aufheizzeit des Wärmeverbrauchers bzw. eines Raumes die Zeit gemeint, die benötigt wird, um den Wärmeverbraucher bzw. den Raum von einer Ausgangstemperatur auf eine Zieltemperatur zu erwärmen.

Eine Heizungsanlage heißt hydraulisch abgeglichen, wenn die vorhandene bzw. erzeugte Wärmemenge optimal auf alle Wärmeverbraucher verteilt wird. Im Normalfall soll dann jeder Wärmeverbraucher genau die Wärme zur Verfügung haben, die er benötigt, um einen Raum auf eine bestimmte Temperatur zu erwärmen.

Eine maximale Ventilstellung ist die Ventilstellung, die maximal zulässig ist, damit die Heizungsanlage hydraulisch abgeglichen ist, das heißt, damit jeder der vorhandenen Wärmeverbraucher optimal mit Wärme versorgt.

Durch die in den Unteransprüchen aufgeführten Merkmale sind vorteilhafte Weiterbildungen des erfindungsgemäßen Verfahrens nach dem Hauptanspruch möglich.

Zur Durchführung des automatisierten hydraulischen Abgleichs ist es von Vorteil, wenn in einem Schritt des Verfahrens eine aktuelle Ventilstellung des Ventils, insbesondere eine prozentuale Ventilstellung, ermittelt und gespeichert werden kann. So kann zu jedem Zeitpunkt bestimmt werden, wie weit die ansteuerbare Durchflussöffnung geöffnet bzw. geschlossen ist. Das Maß der Durchflussöffnung, das heißt, wie weit das Ventil geöffnet ist, legt unter anderem die Höhe des Volumenstroms des durch die Durchflussöffnung tretetenden Fluids fest. Dabei korrelieren der Volumenstrom und die Versorgung des Wärmeverbrauchers mit Wärme, so dass durch Steuerung und/oder Regelung des Volumenstroms die Versorgung des Wärmeverbrauchers mit Wärme gelenkt werden kann.

Innerhalb des Verfahrens wird die Ventilstellung des Ventils reduziert, sofern die Ist-Aufheizzeit geringer als die Soll-Aufheizzeit ist. Zusätzlich oder alternativ wird die Ventilstellung vergrößert sofern die Ist-Aufheizzeit größer als die Soll-Aufheizzeit ist. Dieser Vorgehensweise liegt die Erkenntnis zugrunde, dass Wärmeverbraucher, welche eine geringere Ist-Aufheizzeit als die Soll-Aufheizzeit haben, eine Ist-Temperatur, beispielsweise eines Raumes, schneller auf eine Soll-Temperatur bringen können, wobei Wärmeverbraucher mit einer Ist-Aufheizzeit, die größer als die Soll-Aufheizzeit, für denselben Vorgang länger brauchen. Wärmeverbraucher mit einer geringeren Aufheizzeit werden also mit mehr Wärme versorgt als Wärmeverbraucher mit einer höheren Aufheizzeit. Durch die Reduzierung bzw. Vergrößerung der Ventilstellung kann ein Ausgleich zwischen der Wärmeversorgung der Wärmeverbraucher erreicht werden, das heißt, die Ist-Aufheizzeiten können an die Soll-Aufheizzet angeglichen werden.

Um eine Ist-Aufheizzeit durch die Ventile zu bestimmen, kann es von Vorteil sein, in einem Verfahrensschritt die mindestens zwei Ventile auf eine vorgebbare Initial-Ventilstellung einzustellen, welche als Ausgangspunkt der weiteren Ermittlung der maximalen Ventilstellung dient.

Sobald die Ist-Aufheizzeiten, insbesondere aller Wärmeverbraucher und/oder aller Räume, die vorgegebene Soll-Aufheizzeit erreichen oder überschreiten, wird die dazugehörige Endstellung der jeweiligen Ventile als die maximale Ventilstellung festgelegt. Dabei bezieht sich eine Endstellung auf das Ende, das heißt, auf den letzten Schritt, eines Durchlaufs oder eines Teilschritts des Verfahrens. Beispielsweise können bei Bedarf mehrere Durchläufe oder Teilschritte zu gegebenen Zeiten durchgeführt werden, wobei am Ende jedes Durchlaufs oder Teilschritts die ermittelte Endstellung des Ventils gespeichert wird. In einem nächsten Durchlauf oder Teilschritt kann eine neue Endstellung ermittelt werden, die zusätzlich gespeichert wird oder die zuvor ermittelte Endstellung bzw. maximale Ventilstellung ersetzt. Die Heizungsanlage gilt dann als hydraulisch abgeglichen, wenn nach einem Durchlauf oder allen Teilschritten die Endstellungen bzw. die maximalen Ventilstellungen ermittelt wurden, so dass jeder Wärmeverbraucher optimal mit Wärme versorgt wird.

In diesem Zusammenhang ist es von Vorteil, wenn innerhalb des Verfahrens die maximale Ventilstellung in vorgebbaren Teilschritten ermittelt werden kann.

Beispielsweise können die Teilschritte darin bestehen, dass die Ventilstellung pro einer Zeitspanne jeweils nur um einen bestimmten Wert, beispielsweise um ein Prozent, verändert werden. Beispiele für eine Zeitspanne sind eine Minute, 10 Minuten, eine Stunde, ein Tag, eine Woche usw..

Die Teilschritte können beispielsweise auch darin bestehen, dass das Verfahren zumindest teilweise zu vorgegebenen Zeitpunkten durchgeführt wird. Beispielsweise wird ein vorgebbarer Schritt oder mehrere vorgebbare Schritte um 06:00 durchgeführt. Oder ein vorgebbarer Schritt oder mehrere vorgebbare Schritte werden intervallartig über einen gewissen Zeitraum hinweg zu einem bestimmten Zeitpunkt durchgeführt, beispielsweise jeden Tag um 06:00 über eine Woche hinweg. Die in dem Teilschritt ermittelte Endstellung wird zwischengespeichert. Am Ende des Teilschritts wird die ermittelte Endstellung als die maximale Ventilstellung gespeichert. Die Zeitpunkte können sich auch auf einen Tag allein beziehen, so dass beispielsweise um 06:00, um 12:00 und um 18:00 ein oder mehrerer Schritte des Verfahrens durchgeführt werden. Auch eine nicht äquidistante Verteilung der Zeitpunkte ist dabei möglich, beispielsweise an einem Tag um 06:00, an einem anderen Tag um 12:00 und um 21:00. Zu jedem dieser vorgegebenen Zeitpunkte können die Ist-Aufheizzeit mit der Soll-Aufheizzeit verglichen werden, um die maximale Ventilstellung zu bestimmen. Dadurch wird das Verfahren sehr flexibel und kann, den Bedürfnissen und Umständen angepasst, eingesetzt werden.

Ein weiterer Vorteil ist, dass in einem Schritt des Verfahrens zur Ermittlung der maximalen Ventilstellung mindestens eine Störgröße berücksichtigt werden kann. Dabei kann es sich beispielsweise um eine Sonneneinstrahlung, ein geöffnetes Fenster oder mehrere geöffnete Fenster und/oder um eine Außentemperatur handeln. Dadurch wird die Robustheit des Systems gegenüber solcher Störgrößen erhöht. Weiter werden dadurch auch der Komfort und die Energieeinsparung erhöht.

Jedes der Ventile kann eine Speicher- und/oder Recheneinheit aufweisen. In diese können die Ist-Aufheizzeit und/oder die Soll-Aufheizzeit und/oder eine mittlere Ist-Aufheizzeit und/oder eine momentane Position der Ventilstellungen ausgelesen und/oder eingelesen werden. Ebenso kann eine Ventilstellung in das Ventil eingegeben werden. Damit lässt sich das Ventil auch von außen steuern und/oder bedienen, so dass individuelle Wünsche berücksichtigt werden können. Beispielsweise kann so die Soll-Aufheizzeit an individuelle Bedürfnisse angepasst werden, indem sie erhöht oder reduziert wird.

Wurde der hydraulische Abgleich beendet oder wurde ein Teilschritt des Verfahrens durchgeführt, werden die mindestens zwei Wärmeverbraucher und/oder die mindestens zwei Ventile gemäß einer Einzelraumregelung geregelt. Während der Einzelraumregelung werden die Durchflussöffnungen der Ventile auf deren ermittelte maximale Ventilstellung begrenzt. Dies hat den Vorteil, dass so garantiert wird, dass jeder Wärmeverbraucher gleichmäßig mit Wärme versorgt wird. Weiter kann das Verfahren so sehr einfach innerhalb einer Einzelraumregelung durchgeführt werden, was den Komfort erhöht, da kaum auffällt, dass der hydraulische Abgleich durchgeführt wird.

Die Erfindung betrifft auch ein Ventil, welches gekennzeichnet ist durch eine Bestimmung einer Ist-Aufheizzeit, insbesondere einer Aufheizzeit des mindestens einen Wärmeverbrauchers und/oder einer Aufheizzeit eines Raumes um eine Temperaturdifferenz. Das Ventil weist eine ansteuerbare Durchflussöffnung auf, wobei eine maximale Ventilstellung in Abhängigkeit davon bestimmbar ist, ob die Ist-Aufheizzeit eine vorgebbare Soll-Aufheizzeit überschreitet oder unterschreitet. Dabei ist von dem Ventil ein Signal, welches der ermittelten maximalen Ventilstellung entspricht, generierbar. Dadurch ist die Heizungsanlage hydraulisch abgleichbar und an sich ändernde Randbedingungen anpassbar.

Zum Durchführen des hydraulischen Abgleichs wird ein solches Ventil verwendet. Auf eine zentrale Steuer- und/oder Regeleinheit kann verzichtet werden, ebenso auf eine elektronische Verbindung zwischen der zentralen Steuer- und/oder Regeleinheit und dem Ventil. Dies ist insbesondere dann von Vorteil, wenn in einer, beispielsweise älteren, Heizungsanlage es nicht möglich ist, eine elektronische Verbindung zwischen der zentralen Steuer- und/oder Regeleinheit und dem Ventil herzustellen.

Die Erfindung betrifft weiter eine Heizungsanlage, die mit einem obigen Verfahren automatisiert hydraulisch abgleichbar ist und/oder mindestens ein Ventil, wie eben beschrieben, aufweist, mit welchem der hydraulische Abgleich automatisiert durchführbar ist.

Das Verfahren lässt sich auf analoge Weise auf eine Kühlanlage anwenden, in welcher Kälte zum Kühlen beispielsweise von Räumen oder Gegenständen bereitgestellt wird. Statt eines Wärmeerzeugers wird dann eine Kältequelle verwendet.

### Zeichnung

In den Figuren ist eine schematische Darstellung einer erfindungsgemäßen Heizungsanlage zu sehen sowie ein erfindungsgemäßes Ventil und Verfahren, welches in der folgenden Beschreibung näher dargelegt wird. Es zeigen
- Figur 1: eine erfindungsgemäße Heizungsanlage,
- Figur 2: eine schematische Darstellung eines erfindungsgemäßen Ventils in einem Längsschnitt,
- Figur 3: ein erfindungsgemäßes Verfahren.

### Beschreibung der Zeichnungen

In den Figuren sind gleichen Baukomponenten gleiche Bezugszahlen zugeordnet.

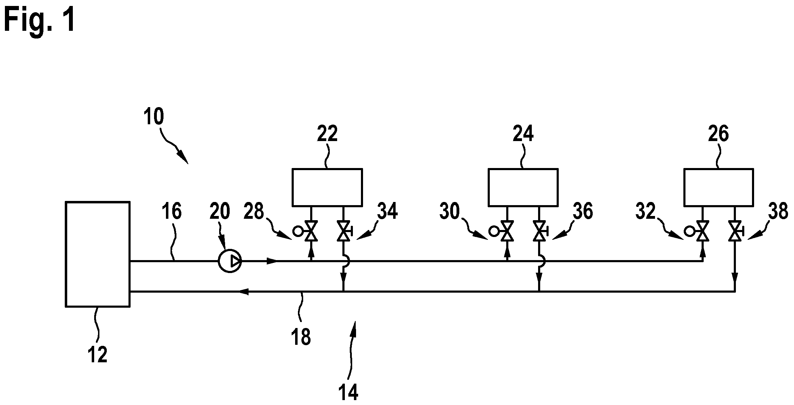

Figur 1 zeigt eine erfindungsgemäße Heizungsanlage 10. Diese weist ein Heizgerät 12, einen Heizkreis 14 mit einem Vorlauf 16, einem Rücklauf 18 und einer Pumpe 20 zur Zirkulations eines Fluids, beispielsweise von Wasser, durch den Heizkreis 14 auf. In dem Heizkreis 14 befinden sich Radiatoren 22, 24, 26, ein erster Radiator 22, ein zweiter Radiator 24 und ein dritter Radiator 26. Im Vorlauf eines jeden Radiators 22, 24, 26 ist jeweils ein Ventil 28, 30, 32 angeordnet, ein erstes Ventil 28, ein zweites Ventil 30 und ein drittes Ventil 32. Hierbei handelt es sich um elektronische Ventile 28, 30, 32, beispielsweise um elektronische Thermostatventile. Im Rücklauf der Radiatoren 22, 24, 26 befindet sich jeweils ein Absperrventil 34, 36, 38, ein erstes Absperrventil 34, ein zweites Absperrventil 36 und ein drittes Absperrventil 38. Üblicherweise weist das Heizgerät 12 eine Steuer- und/oder Regeleinheit zur Steuerung und/oder Regelung der Temperatur des Fluids im Heizkreis auf (nicht gezeigt).

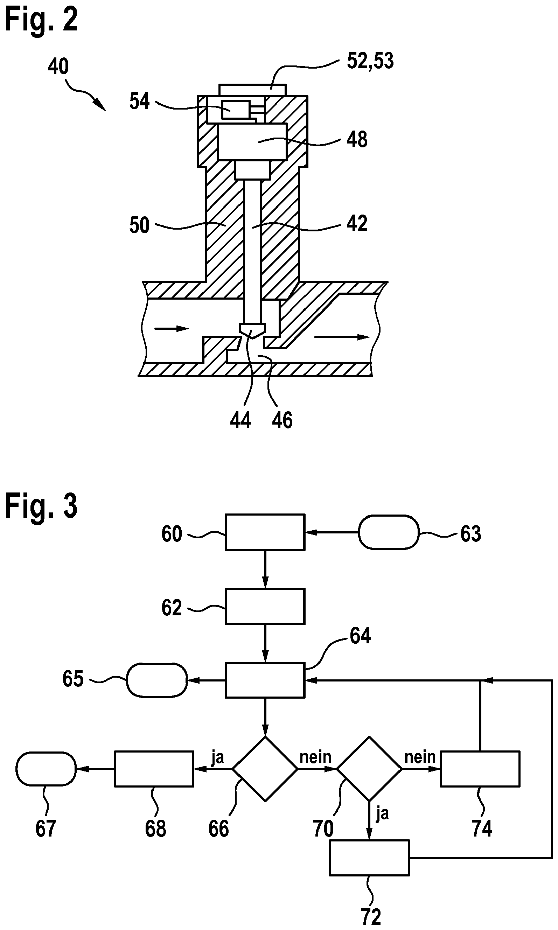

Figur 2 zeigt eine Ausführungsform eines erfindungsgemäßes Ventil 40 in einem Längsschnitt. Das Ventil 40 weist einen Ventilstößel 42 mit einem Verschlussteil 44 auf, mit welchem ein Maß einer Durchflussöffnung 46 einstellbar ist. Anhand eines Stellantriebes 48 ist der Ventilstößel 42 bewegbar, in diesem Beispiel nach oben und unten in vertikaler Richtung. Der Ventilstößel 42 und der Stellantrieb 48 sind von einem Ventilgehäuse 50 umgeben. Am Ventilgehäuse 50 ist eine Anzeige 52 und/oder eine Eingabeeinheit 53 angebracht. Die Eingabeeinheit 53 und die Anzeige 52 können eine Einheit bilden, insbesondere eine bauliche Einheit. Die Anzeige 52 kann alternativ auch andere Eingabemittel aufweisen. Das Ventil 40 weist weiter eine Rechen- und/oder Speichereinheit 54 auf, die innerhalb des Gehäuses 50 angebracht und mit dem Stellantrieb 48 verbunden ist. Die Rechen- und/oder Speichereinheit 54 ist auch mit der Anzeige 52 verbunden.

Figur 3 zeigt ein erfindungsgemäßes Verfahren zum Durchführen eines automatisierten hydraulischen Abgleichs, welches auch anhand Figur 1 beschrieben wird.

In Schritt 60 wird eine Soll-Aufheizzeit 63 vorgegeben. Beispielsweise wird die Soll-Aufheizzeit 63 in der Rechen- und/oder Speichereinheit 54 abgespeichert. Beispielsweise wird diese werksseitig gespeichert. Die Soll-Aufheizzeit 63 kann auch über die Eingabeeinheit 53 und/oder über die Anzeige 52 eingegeben und/oder geändert werden. Die Soll-Aufheizzeit 63 wird in diesem Ausführungsbeispiel in Kelvin bzw. Grad Celsius pro Zeiteinheit angegeben. Die Zeiteinheit ist hier 10 Minuten. Alternativ kann je nach Bedarf auch jede andere Zeiteinheit verwendet werden. In diesem Beispiel wird die Soll-Aufheizzeit 63 auf 1K/10min festgelegt.

In Schritt 62 wird eine aktuelle Ventilstellung für die Ventile 28, 30, 32 eingestellt. Handelt es sich um einen Erstdurchlauf des Verfahrens, handelt es sich bei der aktuellen Ventilstellung um eine Initial-Ventilstellung. Über den Stellantrieb 48 wird dann der Ventilstößel 42 bewegt, so dass die Durchflussöffnung 46 größer oder kleiner wird. Die Vorgaben für die Ventilstellung kommen von der Rechen- und/oder Speichereinheit 54 des jeweiligen Ventils 28, 30, 32, 40. Im folgenden wird die Ventilstellung anhand Prozentangaben vorgegeben. Hierbei bedeutet eine 100%-Ventilstellung, dass der Ventilstößel 42 derart eingestellt wird, dass die Durchflussöffnung 46 zu 100% geöffnet ist. Dies entspricht einem maximal möglichen Durchfluss des Fluids durch das Ventil 28, 30, 32, 40, welcher durch die Bauart den Ventils 28, 30, 32, 40 festgelegt ist. Eine 50%-Ventilstellung bedeutet, dass die Durchflussöffnung zu 50% geöffnet ist usw.. Im Laufe des Verfahrens wird für den Betrieb eine maximale Ventilstellung 67 bestimmt. Dies ist die maximal zulässige Durchflussöffnung, unter welcher jeder Wärmeverbraucher 22, 24, 26 gleichmäßig mit so viel Wärme versorgt wird, wie er benötigt. Damit die Heizungsanlage 10 hydraulisch abgeglichen ist, wird das Ventil 28, 30, 32, 40 nicht über die bestimmte maximale Ventilstellung 67 hinaus geöffnet.

Für das Ausführungsbeispiel wird eine Ventilstellung von 100% eingestellt, das heißt, jedes der Ventile 28, 30, 32 wird voll geöffnet.

Bei Bedarf kann in Schritt 62 die aktuelle Ventilstellung eines oder mehrerer Ventile 28, 30, 32 ermittelt werden. Dies kann die Einstellung der aktuellen Ventilstellung ersetzen. Oder eine Ermittlung und Einstellung der aktuellen Ventilstellung wird in Schritt 62 zugleich ausgeführt.

In Schritt 64 wird durch die Ventile 28, 30, 32 eine Ist-Aufheizzeit 65 bestimmt. Im Ausführungsbeispiel wird die Ist-Aufheizzeit 65 in Kelvin pro Zeiteinheit angegeben. Zur Bestimmung der Ist-Aufheizzeit 65 wird zu einem Anfangszeitpunkt eine momentante Temperatur gemessen und gespeichert. Nach Verstreichen der Zeiteinheit, zum Beispiel 10 Minuten, wird die momentane Temperatur nochmals gemessen und gespeichert. Die Ist-Aufheizzeit 65 ergibt sich nun aus dem Betrag der Differenz der beiden gemessenen Temperaturwerte, geteilt durch die Zeiteinheit, welche zwischen den beiden Temperaturmessungen liegt. Ergab beispielsweise die erste Messung eine Temperatur von 293 Kelvin und die zweite Messung eine Temperatur von 295 Kelvin, so beträgt der Betrag der Differenz der beiden Temperaturen 2 Kelvin, und die Ist-Aufheizzeit 65 ist somit 2K/10min.

In Schritt 66 wird in jedem der Ventile 28, 30, 32 abgefragt, ob die Ist-Aufheizzeit 65 gleich der Soll-Aufheizzeit 63 ist. Hierbei kann bei Bedarf eine Hysterese beachtet werden. Ist dem so, wird das Verfahren in Schritt 68 fortgesetzt, sonst in Schritt 70.

In Schritt 68 wird die aktuelle Ventilstellung als die maximale Ventilstellung 67 gespeichert. In diesem Fall erhalten alle Radiatoren 22, 24, 26 die Wärme, die sie benötigen. Die Heizungsanlage 10 ist hydraulisch abgeglichen.

In Schritt 70 wird abgefragt, ob die Ist-Aufheizzeit 65 kleiner als die Soll-Aufheizzeit 63 ist. Hierbei ist unter "kleiner" gemeint, dass mit der aktuellen Ventilstellung pro Zeiteinheit (hier pro 10 Minuten) die Temperatur mehr erhöht wird als vorgegeben. Ist die Ist-Aufheizzeit 65 kleiner als die Soll-Aufheizzeit 63, bedeutet dies, dass die Temperaturerhöhung, beispielsweise des Raumes, in dem der Radiator 22, 24, 26 steht oder des Radiators 22, 24, 26 selbst, schneller vonstatten ging als gewollt. Das heißt, der entsprechende Radiator 22, 24, 26 ist mit Wärme überversorgt, die Ventilstellung muss reduziert werden. Im anderen Fall, wenn die Ist-Aufheizzeit 65 größer der Soll-Aufheizzeit 63 ist, ist der entsprechende Radiator 22, 24, 26 mit Wärme unterversorgt, das heißt, die Ventilstellung muss vergrößert werden. "Größere Ist-Aufheizzeit" meint hier, dass pro Zeiteinheit eine geringere Temperaturerhöhung als gewollt erreicht wurde.

Ergibt die Abfrage in Schritt 70, dass die Ist-Aufheizzeit 65 kleiner als die Soll-Aufheizzeit 63 ist, wird das Verfahren in Schritt 72 fortgesetzt, anderweitig in Schritt 74.

In Schritt 72 wird die aktuelle Ventilstellung reduziert. War die Ventilstellung zuvor bei 100%, so wird diese um einen vorgebbaren Prozenzwert reduziert, beispielsweise um 10% auf 90%. Durch diese Reduktion fließt nun weniger Volumen pro Zeit durch das Ventil 28, 30, 32, und der entsprechende Radiator 22, 24, 26 wird mit weniger Wärme versorgt. Dafür steht einem anderen Radiator 22, 24, 26 mehr Wärme zur Verfügung. Das Verfahren kehrt dann zu Schritt 64 zurück.

In Schritt 74 wird die aktuelle Ventilstellung vergrößert, beispielsweise von 90% auf 95%. Ist dies nicht möglich, da das Ventil zum Beispiel bereits zu 100% geöffnet ist, wird die aktuelle Ventilstellung beibehalten. Das Verfahren wird wieder in Schritt 64 fortgesetzt.

Die zuvor genannten Schritte können parallel, das heißt für alle Ventile 28, 30, 32 gleichzeitig, oder seriell, das heißt, für ein Ventil 28, 30, 32 nach dem andern, durchgeführt werden.

Zur Veranschaulichung des Verfahrens wird in einem Ausführungsbeispiel angenommen, dass in Schritt 64 für das erste Ventil 28 eine Ist-Aufheizzeit 65 von 2K/10min ermittelt wurde.

Beginnend mit dem ersten Ventil 28, ergibt die Abfrage in Schritt 66, dass die Ist-Aufheizzeit 65 und die Soll-Aufheizzeit 63 von 1K/10min ungleich sind. Die Abfrage in Schritt 70 ergibt, dass die Ist-Aufheizzeit 65 kleiner als die Soll-Aufheizzeit 65 ist, das heißt, der zugehörige erste Radiator 22 ist mit Wärme überversorgt. Daher wird die aktuelle Ventilstellung von 100% reduziert, beispielsweise auf 90%.

Nun wird wieder Schritt 64 wiederholt. Hier wird eine Ist-Aufheizzeit 65 von 1,5K/10min ermittelt. Die Ventilstellung wird weiter reduziert (Schritt 72), beispielsweise auf 80%. Eine erneute Wiederholung des Schrittes 65 und der Abfrage in Schritt 66 ergeben, dass die Ist-Aufheizzeit 65 und die Soll-Aufheizzeit 63 nun gleich oder ungefähr gleich sind. Die Ventilstellung von 80% wird als die maximale Ventilstellung 67 für das erste Ventil 28 abgespeichert.

Die Schritte werden auch für das zweite Ventil 30 und das dritte Ventil 32 durchgeführt.

Wird die Ventilstellung eines Ventils 28, 30, 32 verändert, so hat dies Auswirkungen auch auf die Aufheizzeiten der restlichen Ventile. Dies wird anhand folgenden Beispiels veranschaulicht.

In Schritt 64 werden die Ist-Aufheizzeiten aller Ventile 28, 30, 32 bestimmt. Dies ergibt eine Ist-Aufheizzeit von 2,0K/10min für das erste Ventil 28, für das zweite Ventil 30 ist sie 1,5K/10min, für das dritte Ventil 32 ist sie 0,5K/10min.

In einem Durchlauf wird die Ventilstellung des ersten Ventils 28 von 90% auf 80% reduziert. Mit dieser Ventilstellung ergibt sich schließlich in Schritt 64 eine Ist-Aufheizzeit 65 von 1,0K/10min, welche gleich der Soll-Aufheizzeit 63 ist. Bei einer Ventilstellung von 100% des zweiten Ventils 30 ändert sich nun die Ist-Aufheizzeit 65 des zweiten Ventils 30 zu 1,5K/10min, das heißt, die Ist-Aufheizzeit ist kleiner geworden. Die Ist-Aufheizzeit 65 des dritten Ventils 32 wurde zu 1,2K/10min bestimmt. Da die Ist-Aufheizzeit 65 des ersten Ventils 28 mit der Soll-Aufheizzeit 63 übereinstimmt, wird die aktuelle Ventilstellung von 80% als die maximale Ventilstellung 67 für das este Ventil 28 gespeichert. Für die beiden anderen Ventile 30, 32 werden die Schritte 64 bis 72 wiederholt.

Der Vorteil des Verfahrens besteht auch darin, dass derartige Schwankungen, die sich beispielsweise aus einer Änderung einer Ventilstellung eines Ventils ergeben, berücksichtigt werden. Ergibt beispielsweise die Abfrage in Schritt 64, dass unter der maximalen Ventilstellung 67, welche zuvor ermittelt wurde, das zugehörige Ventil 28, 30, 32 zu einem späteren Zeitpunkt mit Wärme über- oder unterversorgt ist, so wird dies sofort den momentanen Gegegebenheiten angepasst und eine neue maximale Ventilstellung 67 ermittelt.

Innerhalb des Verfahrens kann die Ventilstellung in Teilschritten geändert werden. Hierfür werden die Teilschritte vorgegeben, wobei beispielsweise in Schritt 72 bzw. 74 die Ventilstellung maximal um 1% pro Durchlauf verändert wird. Weiter kann eine zeitliche Abfolge der Durchläufe vorgegeben werden, beispielsweise ein Durchlauf pro Tag zu einem vorgebbaren Zeitpunkt oder ein Durchlauf zu vorgebbaren Zeitpunkten, beispielsweise an einem Tag um 08:00, um 12:00 und um 18:00, oder eine Woche lang jeden Tag um 12:00 usw. Ebenso können einzelne Schritte des Verfahrens einem oder mehreren Zeitpunkten zugeordnet werden. In dieser Weise lässt sich beispeilsweise ein beliebiger Zeiplan zur Durchführung des Verfahrens festlegen, je nach Bedarf. Hierdurch lassen sich auch andere Randbedingungen und/oder Störgrößen berücksichtigen. Beispielsweise ist das Heizverhalten der Heizungsanlage 10 an einem sonnigen Tag anders als einem bewölkten Tag. Ebenso ändern sich die Randbedingungen, wenn ein offenes Fenster die Temperaturentwicklung im Raum beeinflusst. Auch die Außentemperatur hat Auswirkungen auf das Heizverhalten der Heizungsanlage 10. All dies kann durch die zeitliche Flexibilität der Durchführung des Verfahrens berücksichtigt werden, was zu weniger Störanfälligkeit und mehr Stabilität des Systems führt.

Innerhalb des Verfahrens werden auch Daten, die von außen in das elektronische Ventil 40 eingegeben werden, berücksichtigt. Ebenso können Daten ausgelesen werden. Mit den vorhandenen Informationen lässt sich das Verfahren weiter optimieren.

Beispielsweise kann eine mittlere Aufheizzeit innerhalb des Verfahrens bestimmt und ausgelesen werden. Zur Bestimmung der mittleren Aufheizzeit eines Ventils 28, 30, 32 werden die ermittelten Ist-Aufheizzeiten gespeichert, addiert und durch die Anzahl der ermittelten Ist-Aufheizzeiten dividiert.

Die ermittelten maximalen Ventilstellungen der Ventile 28, 30, 32 lassen sich an jedem Ventil auslesen. Beispielsweise ergab ein Durchlauf des Verfahrens folgende Werte, die auf der Anzeige 52 des Ventils 28, 30, 32 angezeigt werden: Erster Radiator 22: Ist-Aufheizzeit = 1,1K/10min, maximale Ventilstellung = 70%; zweiter Radiator 24: Ist-Aufheizzeit = 1,0K/10min, maximale Ventilstellung = 50%; dritter Radiator 26: Ist-Aufheizzeit = 1,1K/10min, maximale Ventilstellung = 80%. Werksseitig wurde eine Soll-Aufheizzeit 63 von 1k/10min vorgegeben. Den Daten ist zu entnehmen, dass alle Ventilstellungen reduziert wurden. Würden die Ventile 28, 30, 32 zu 100% geöffnet werden, würden die entsprechenden Räume schneller erwärmt werden. Keines der Ventile 28, 30, 32 kann voll geöffnet werden, denn die maximale Ventilstellung ist jeweils kleiner als 100%. Hieraus kann geschlossen werden, dass die vorgegebene Soll-Aufheizzeit 63 dahingehend geändert werden kann, dass die Räume schneller erwärmt werden. Dies würde beispielsweise eine neue Soll-Aufheizzeit von 1,5K/10min erfüllen. Mit dieser neuen Soll-Aufheizzeit wird nun das Verfahren durchgeführt und neue maximale Ventilstellungen ermittelt.

Ebenso kann auf diese Weise festgestellt werden, ob die vorgegebene Soll-Aufheizzeit 63 zu groß ist, also der Raum beispielsweise aufgrund von zu geringer Heizleistung des Heizgerätes 12 nicht schnell genug aufgeheizt werden kann. Der Anzeige 52 des Ventils werden beispielsweise folgende Daten entnommen: Erster Radiator 22: Ist-Aufheizzeit = 1,1K/10min, maximale Ventilstellung = 70%; zweiter Radiator 24: Ist-Aufheizzeit = 1,6K/10min, maximale Ventilstellung = 100%; dritter Radiator 26: Ist-Aufheizzeit = 1,5K/10min, maximale Ventilstellung = 100%. Es wurde eine Soll-Aufheizzeit 63 von 1K/10min vorgegeben. Aufgrund der Daten wird die Soll-Aufheizzeit auf 1,6K/10min geändert, so dass alle Radiatoren 22, 24, 26 langsamer, dafür gleichmäßig mit genug Wärme versorgt werden. Das Verfahren wird mit dieser neuen Soll-Aufheizzeit durchgeführt und es werden neue maximale Ventilstellungen für die Ventile 28, 30, 32 automatisch ermittelt.

Wurden die maximalen Ventilstellungen ermittelt, gilt die Heizungsanlage 10 als hydraulisch abgeglichen. In diesem Fall werden die Radiatoren 22, 24, 26 und Ventile 28, 30, 32 gemäß einer Einzelraumregelung geregelt.

Das Verfahren lässt sich einfach in eine Einzelraumregelung integrieren, ohne dass Komfort eingebüßt wird. Dies trifft insbesondere auch für den Fall zu, wenn das Verfahren in Teilschritten oder zu vorgegebenen Zeitpunkten durchgeführt wird. Zur Festlegung der Zeitpunkte oder der Teilschritte kann hierbei berücksichtigt werden, dass beispielsweise morgens mehr und schneller Wärme benötigt wird als nachts oder tagsbüber, wenn keine Personen anwesend sind.

## Patentansprüche

1. Verfahren zum Durchführen eines automatisierten hydraulischen Abgleichs einer Heizungsanlage (10) mit mindestens einem Wärmeerzeuger (12), mindestens zwei Wärmeverbrauchern (22, 24, 26) und mindestens zwei Ventilen (28, 30, 32, 40), wobei insbesondere die mindestens zwei Ventile (28, 30, 32, 40) einen Durchfluss durch die mindestens zwei Wärmeverbraucher (22, 24, 28) steuern, wobei die mindestens zwei Ventile (28, 30, 32, 40) jeweils eine ansteuerbare Durchflussöffnung (46) aufweisen, wobei die mindestens zwei Ventile (28, 30, 32, 40) mit dem mindestens einen Wärmeerzeuger (12) und den mindestens zwei Wärmeverbrauchern (22, 24, 26) verbunden sind, **dadurch gekennzeichnet, dass** eine Ist-Aufheizzeit (65) - insbesondere eine Aufheizzeit der mindestens zwei Wärmeverbraucher (22, 24, 26) und/oder eine Aufheizzeit eines Raumes um eine Temperaturdifferenz - durch die mindestens zwei Ventile (28, 30, 32, 40) bestimmt wird, und dass maximale Ventilstellungen (67) der mindestens zwei Ventile (28, 30, 32, 40) in Abhängigkeit davon festgelegt werden, ob die Ist-Aufheizzeit (65) eine vorgegebene Soll-Aufheizzeit (63) überschreitet oder unterschreitet, wodurch die Heizungsanlage (10) hydraulisch abgeglichen und an sich ändernde Randbedingungen angepasst wird.

2. Verfahren nach Anspruch 1, daduch gekennzeichnet, dass eine aktuelle Ventilstellung, insbesondere eine prozentuale Ventilstellung, ermittelt und gespeichert wird.

3. Verfahren nach einem der Ansprüche 1 oder 2, daduch gekennzeichnet, dass die Ventilstellung reduziert wird, sofern die Ist-Aufheizzeit (65) geringer als die Soll-Aufheizzeit ist (63), und/oder dass die Ventilstellung vergrößert wird, sofern die Ist-Aufheizzeit (65) größer als die Soll-Aufheizzeit (63) ist.

4. Verfahren nach einem der vorhergehenden Ansprüche, **dadurch gekennzeichnet, dass** in einem Verfahrensschritt die mindestens zwei Ventile (28, 30, 32, 40) auf eine vorgebbare Initial-Ventilstellung eingestellt werden, um die Ist-Aufheizzeit (65) zu ermitteln und zu speichern.

5. Verfahren nach einem der vorhergehenden Ansprüche, **dadurch gekennzeichnet, dass** die Heizungsanlage (10) hydraulisch abgeglichen oder teilweise hydraulisch abgeglichen ist, wenn die Ist-Aufheizzeit (65) aller Ventile (28, 30, 32, 40), insbesondere aller Wärmeverbraucher (14) und/oder aller Räume, die Soll-Aufheizzeit (63) erreicht oder überschreitet, wobei dann die maximalen Ventilstellungen (67) festgelegt werden als die ermittelten Endstellungen der mindestens zwei Ventile (28, 30, 32, 40).

6. Verfahren nach einem der vorhergehenden Ansprüche, **dadurch gekennzeichnet, dass** die maximale Ventilstellung (67) in vorgebbaren Teilschritten ermittelt wird.

7. Verfahren nach einem der vorhergehenden Ansprüche, **dadurch gekennzeichnet, dass** die maximale Ventilstellung (67) zu einem oder mehreren vorgegebenen Zeitpunkten ermittelt wird, wobei die Ist-Aufheizzeit (65) und die Soll-Aufheizzeit (63) zu diesen Zeitpunkten miteinander verglichen werden.

8. Verfahren nach einem der vorhergehenden Ansprüche, **dadurch gekennzeichnet, dass** bei der Ermittlung der maximalen Ventilstellung (67) mindestens eine Störgröße, insbesondere eine Sonneneinstrahlung, mindestens ein geöffnetes Fenster und/oder eine Außentemperatur, berücksichtigt wird.

9. Verfahren nach einem vorhergehenden Ansprüche, **dadurch gekennzeichnet, dass** in eine Speicher- und/oder Recheneinheit (54) der mindestens zwei Ventile (28, 30, 32, 40) die Ist-Aufheizzeit (65) und/oder die Soll-Aufheizzeit (63) und/oder eine mittlere Ist-Aufheizzeit und/oder eine momentane Position der Ventilstellungen ausgelesen und/oder eingelesen und/oder am Ventil (28, 30, 32, 40) eingestellt werden.

10. Verfahren nach einem der vorhergehenden Ansprüche, **dadurch gekennzeichnet, dass** nach dem automatisierten hydraulischen Abgleich die mindestens zwei Wärmeverbraucher (22, 24, 26) und/oder die mindestens zwei Ventile (28, 30, 32, 40) gemäß einer Einzelraumregelung geregelt werden, wobei während der Einzelraumregelung die Durchflussöffnungen (46) der mindestens zwei Ventile (28, 30, 32, 40) auf deren ermittelte maximale Ventilstellung (67) begrenzt werden.

11. Ventil, **gekennzeichnet durch** eine Bestimmung einer Ist-Aufheizzeit (65) - insbesondere einer Aufheizzeit des mindestens einen Wärmeverbrauchers (22, 24, 26) und/oder einer Aufheizzeit eines Raumes um eine Temperaturdifferenz - wobei das Ventil (28, 30, 32, 40) eine ansteuerbare Durchflussöffnung (46) aufweist, wobei eine maximale Ventilstellung (67) in Abhängigkeit davon einstellbar ist, ob die Ist-Aufheizzeit (65) eine vorgebbare Soll-Aufheizzeit (63) überschreitet oder unterschreitet, wodurch die Heizungsanlage (10) hydraulisch abgleichbar und an sich ändernde Randbedingungen anpassbar ist.

12. Heizungsanlage, welche mit einem Verfahren nach einem der Ansprüche 1 bis 10 automatisiert hydraulisch abgleichbar ist und/oder mindestes ein Ventil (40) nach Anspruch 11 aufweist.
